Europäisches Patentamt

European Patent Office

Office européen des brevets

(19)

(11) Numéro de publication : **0 080 688**
**B1**

(12) **FASCICULE DE BREVET EUROPÉEN**

(45) Date de publication du fascicule du brevet :
05.03.86

(51) Int. Cl.⁴ : **H 04 B 3/20**

(21) Numéro de dépôt : 82110801.6

(22) Date de dépôt : 23.11.82

(54) **Procédé et dispositif de détection sur une voie téléphonique de signaux de données ou de signalisation.**

(30) Priorité : 27.11.81 FR 8122241

(43) Date de publication de la demande :
08.06.83 Bulletin 83/23

(45) Mention de la délivrance du brevet :
05.03.86 Bulletin 86/10

(84) Etats contractants désignés :
BE DE FR GB IT LU NL SE

(56) Documents cités :
FR-A- 2 240 583
GB-A- 2 031 696
IEEE TRANSACTIONS ON COMMUNICATIONS, vol.
COM-26, no. 1, janvier 1978, pages 140-145, New York
(USA); P.G. DRAGO et al.: "Digital dynamic speech
detectors"

(73) Titulaire : **COMPAGNIE INDUSTRIELLE DES TELE-
COMMUNICATIONS CIT-ALCATEL S.A. dite:**
**12, rue de la Baume**
**F-75008 Paris (FR)**

(72) Inventeur : **de Bergh, Guy**
**6, avenue de Brimont**
**F-78400 Chatou (FR)**
Inventeur : **Spitéri, Jean-Claude**
**33 impasse La Cerisaie**
**F-91120 Palaiseau (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

La présente invention est relative à la transmission téléphonique et concerne la détection de signaux de données sur une voie téléphonique, notamment celle de signaux de signalisation en vue de neutraliser des dispositifs de suppression d'échos.

Les liaisons téléphoniques qui empruntent des circuits longue distance quatre fils couplés par des circuits hybrides à des circuits locaux deux fils sont le siège de phénomènes d'écho dus à des équilibrages imparfaits de coupleurs hybrides. Ces phénomènes d'échos sont très gênants pour un interlocuteur dès que leur retard dépasse 45 millisecondes et doivent être affaiblis sous peine de rendre la parole incompréhensible. On utilise pour cela des dispositifs de suppression d'échos atténuant fortement, en cas de simple parole, le signal de réception de l'interlocuteur qui parle et atténuant moyennement, en cas de double parole, les deux sens de transmission. Ces dispositifs peuvent agir par l'intermédiaire d'affaiblisseurs commandés intercalés dans le trajet des signaux de parole et sont alors appelés suppresseurs d'échos. Mais ils peuvent aussi agir par l'intermédiaire des commandes de sensibilité de détecteurs de parole de dispositifs de concentration de signaux téléphoniques par répartition dans le temps qui sont connus sous le sigle français CELTIC ou le sigle anglais TASI et qui équipent certaines liaisons afin d'en augmenter les capacités en évitant d'acheminer les temps morts des conversations.

Cette manière d'affaiblir les échos utilisée couramment pour les signaux de parole ne convient pas pour des signaux de données et de signalisation qui sont très souvent émis simultanément dans les deux sens de transmission de sorte qu'il faut, lors de leur transmission, soit contourner, soit neutraliser les dispositifs de suppression d'échos.

Il est connu, par le document FR-A-2 240 583 de détecter des signaux de données et de signalisation sur une voie téléphonique conforme à l'avis G161 du CCITT à partir de la raie de fréquence du signal d'identification qui précède une transmission des données. Cette raie de fréquence émise à 2 100 Hz ± 15 et reçue à un niveau compris entre 0 et − 35 dBmO est détectée par comptage des passages par zéro entre 208 et 212 sur une durée de 50 ms ce qui correspond, dans le domaine des fréquences à une fenêtre comprise entre 2 008 Hz et 2 120 Hz. Ce procédé présente l'inconvénient de ne fonctionner qu'en présence d'un signal d'identification.

Il est également connu, par l'Article de P.G. DRAGO, A.M. MOLINARI et F.C. VAGLIANI intitulé « DIGITAL DYNAMIC SPEECH DETECTORS » et paru dans la revue IEEE Transactions on Communications, vol. COM-26 N° 1 Janvier 1978, pages 140 à 145 d'assimiler la parole au produit de deux signaux aléatoires : une porteuse avec un spectre contenu entre 300 Hz et 3 400 Hz et une enveloppe contenue dans une bande de fréquence beaucoup plus étroite 0-75 Hz représentant la puissance moyenne à court terme de la parole. Ce modèle conduit à un procédé de détection des silences d'une conversation consistant à les assimiler aux intervalles de temps de durée supérieure à une valeur minimale pendant lesquels l'enveloppe reste en dessous d'un seuil de − 30 dBmO et à deux perfectionnements imposant en outre aux variations relatives de niveau d'enveloppe de rester dans une certaine plage. Ce procédé et ces perfectionnements ne sont pas directement adaptés à la distinction entre des signaux de parole et des signaux de données ou de signalisation.

La présente invention a pour but une détection des signaux de données ou de signalisation sur une voie téléphonique qui soit efficace, rapide et simple à mettre en œuvre dans une technique numérique.

Elle a pour objet un procédé de détection dans une voie téléphonique de signaux de données ou de signalisation indépendamment les uns des autres consistant à :

comparer l'amplitude du signal présent sur la voie téléphonique à un seuil de niveau,

mesurer les valeurs maximales atteintes par l'amplitude du signal présent sur la voie téléphonique au cours de fenêtres temporelles successives de même durée, cette durée étant au moins égale à la période de la composante de la plus basse fréquence des signaux de données et de signalisation ainsi qu'à la plus grande période de battement entre fréquences susceptible d'être présentée par ces signaux,

calculer des écarts entre les valeurs maximales d'amplitude mesurées,

comparer les valeurs absolues des écarts calculés à au moins un seuil d'écart

et détecter des signaux de données et de signalisation chaque fois qu'au cours d'une durée dite temps d'activité préalable et formée d'un certain nombre de fenêtres temporelles consécutives, le seuil de niveau a été dépassé sans que le seuil d'écart le soit.

De préférence, on prévoit, à la suite de toute détection d'un signal de données ou de signalisation, un temps de maintien pendant lequel le signal présent sur la voie téléphonique est systématiquement considéré comme un signal de données ou de signalisation et on raccourcit le temps d'activité préalable pendant les temps de maintien.

Selon un mode particulier de mise en œuvre du procédé de détection, le calcul des écarts s'effectue, entre valeurs maximales d'amplitude atteintes au cours de fenêtres successives, par soustraction entre la dernière et l'avant-dernière valeurs maximales mesurées, ainsi qu'entre des valeurs maximales non successives par cumul algébrique des écarts entre valeurs maximales successives.

Dans le cadre particulier de la détection de signaux de signalisation téléphonique de ligne ou entre enregistreurs selon les systèmes de signalisation n° 4 et 5 du CCITT ou encore de test de continuité selon les systèmes de signalisation n° 6 et 7 du CCITT dont les fréquences sont dans la partie haute de la bande vocale on procède également à une analyse fréquentielle sommaire et l'on ne valide une détection de signal de données ou de signalisation que dans le cas où le signal présent sur la voie téléphonique comporte une composante de fréquence prépondérante dans le haut de la bande vocale. Lorsque le signal présent sur la voie téléphonique est disponible sous forme d'échantillons pris à cadence régulière, l'analyse fréquentielle peut être combinée avec la comparaison de l'amplitude du signal à un seuil de niveau par une comptabilisation des changements de signe et absence de changement de signe entre échantillons successifs supérieurs, en valeur absolue, au seuil de niveau.

La présente invention a également pour objet un dispositif pour la mise en œuvre du procédé précité. Ce dispositif comporte :

des moyens comparateurs comparant l'amplitude du signal présent sur la voie téléphonique avec un seuil de niveau,

des moyens de cadencement fournissant des signaux de cadencement déterminant des fenêtres temporelles successives de même durée, ladite durée étant au moins égale à la composante de plus basse fréquence des signaux de données et de signalisation ainsi qu'à la plus grande période de battement entre fréquences susceptible d'être présentée par ces signaux,

des moyens indicateurs de valeurs maximales cadencés par les moyens de cadencement délivrant la valeur maximale atteinte, au cours de chaque fenêtre temporelle, par l'amplitude du signal présent sur la voie téléphonique,

des moyens indicateurs d'écarts calculant les écarts entre les valeurs maximales délivrées par les moyens indicateurs de valeurs maximales,

des moyens estimateurs d'écarts comparant, par rapport à au moins un seuil d'écart, les valeurs absolues des écarts fournis par les indicateurs d'écarts

et des moyens détecteurs pilotés par les moyens comparateurs, estimateurs et de cadencement, délivrant un signal de détection de données et de signalisation chaque fois, que, au cours d'une durée dite temps d'activité préalable et formée d'un certain nombre de fenêtres temporelles consécutives, les moyens comparateurs d'amplitude ont donné une indication de dépassement du seuil de niveau et les moyens estimateurs d'écarts une indication de non dépassement du seuil d'écart.

D'autres caractéristiques et avantages de l'invention ressortiront des revendications jointes et de la description ci-après d'un mode de réalisation donné à titre d'exemple. Cette description sera faite en regard du dessin dans lequel

la figure 1 représente un diagramme synoptique d'un dispositif de détection conforme à l'invention,

la figure 2 est un schéma d'un comparateur à seuils d'écart repéré à la figure 1,

la figure 3 est un schéma d'un comparateur à seuils de niveau et de fréquence repéré à la figure 1,

la figure 4 est un schéma d'un détecteur et d'un circuit à temps de maintien repérés à la figure 1,

la figure 5 est un schéma d'un circuit de cadencement repéré à la figure 1.

Le dispositif de détection illustré dans les figures est de type numérique. Il est prévu pour traiter un signal de voie téléphonique disponible sous forme d'échantillons numériques successifs. Pour la simplicité de la présentation, il ne surveille qu'une seule voie. Bien entendu, il pourrait être adapté à la surveillance simultanée de plusieurs voies par adoption d'une technique de traitement en temps partagé.

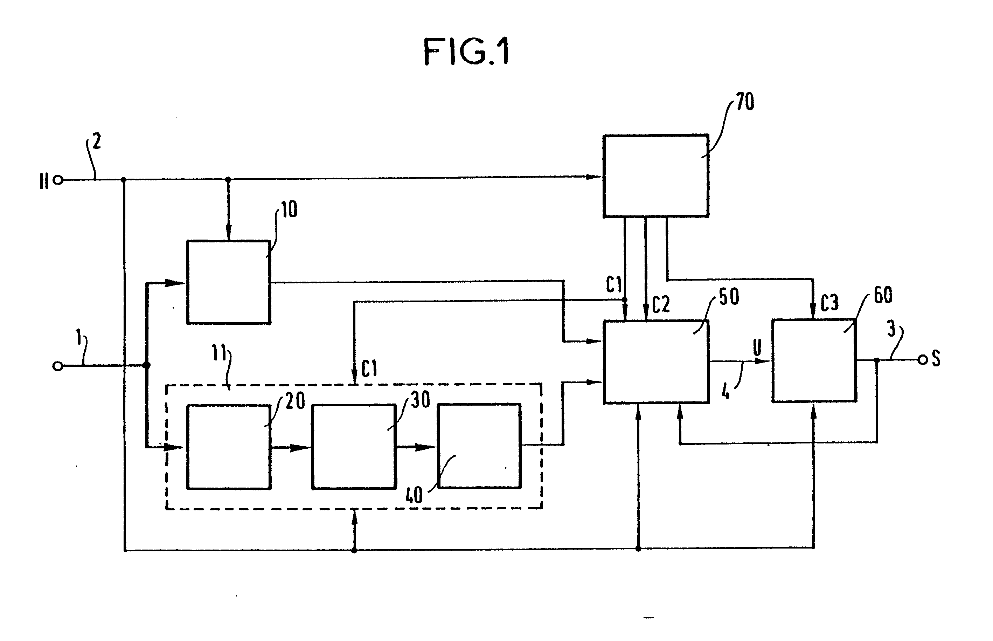

Ce dispositif présente, comme illustré sur la figure 1, une entrée de données 1 sur laquelle sont appliqués en parallèle les bits d'amplitude et le bit de signe des échantillons numériques d'un signal de voie téléphonique, une entrée 2 de cadencement sur laquelle est appliqué un signal H -d'horloge à la cadence d'échantillonnage et une sortie 3 sur laquelle est disponible un signal binaire S traduisant par son état la présence ou l'absence d'un signal de données ou de signalisation. Il comporte deux circuits comparateurs à seuils 10 et 11 disposés en parallèle à son entrée et sensibles l'un 10 à la fréquence d'apparition des échantillons numériques dont les amplitudes sont supérieures à un seuil de niveau donné et l'autre 11 aux écarts entre les valeurs maximales atteintes par les amplitudes des échantillons numériques au cours de fenêtres temporelles successives de même durée, un détecteur 50 commandé à la fois par les circuits comparateurs à seuils 10 et 11, un circuit à temps de maintien 60 qui est disposé à la suite du détecteur 50 et qui délivre le signal de sortie S et un circuit de cadencement 70 fournissant divers signaux de cadencement.

Le comparateur à seuils de niveau et de fréquence 10 met en œuvre un critère de niveau et permet de s'assurer de la présence, sur la voie téléphonique surveillée, d'un signal autre que du bruit avant de procéder vraiment à une discrimination entre des signaux de parole et de données. Il permet accessoirement, comme on le verra ultérieurement de tirer partie, dans certaines applications, des caractéristiques fréquentielles particulières des signaux que l'on cherche à détecter pour mettre en œuvre un critère de fréquence. Il est sensible au franchissement d'un seuil par la cadence d'apparition des échantillons dont les amplitudes sont supérieures à un seuil de niveau choisi, au-dessus du niveau de bruit moyen. Cette cadence d'apparition est obtenue par comptage des échantillons supérieurs au seuil de niveau à l'aide d'un compteur qui est, par ailleurs décrémenté à une certaine fréquence. Le comparateur à seuils 10, qui est relié pour ce faire aux entrées 1 et 2 du dispositif général, émet un signal d'autorisation ou d'inhibition en direction du détecteur 50 dès que le compteur déborde par valeur supérieure ou inférieure.

Le comparateur à seuils d'écart 11 permet d'effectuer la discrimination proprement dite entre les signaux de parole et les signaux de données par la mise en œuvre d'un critère de régularité d'amplitude. Il est formé d'un circuit indicateur de valeurs maximales 20 suivi d'un circuit indicateur d'écarts 30 et d'un circuit estimateur d'écarts 40. Il permet de vérifier si les valeurs maximales absolues atteintes par l'amplitude du signal présent sur la voie téléphonique surveillée au cours de fenêtres temporelles successives de même durée restent ou non voisines les unes des autres. Ce critère s'est en effet révélé particulièrement efficace pour distinguer des signaux de données caractérisés par une puissance moyenne quasi constante sur un petit intervalle de temps des signaux vocaux caractérisé par une puissance moyenne très variable sur un petit intervalle de temps. Pour ce faire le comparateur à seuils d'écart 11 reçoit les bits des échantillons appliqués à l'entrée 1, à l'exception du bit de signe ou bit de polarité, le signal H d'horloge présent sur l'entrée 2 et un signal de cadencement C1 définissant des fenêtres temporelles successives de même durée et provenant du circuit de cadencement 70.

Le détecteur 50 délivre sur sa sortie 4 un signal binaire U dont l'état logique est fonction de la détection ou non de signaux de données. Il se déclenche et détecte des signaux de données chaque fois qu'il a reçu constamment, au cours d'une durée formée d'un certain nombre de fenêtres temporelles successives et dite de temps d'activité préalable, d'une part, en provenance du comparateur à seuils 10, un signal binaire à l'état logique correspondant à la réception, à une cadence suffisante sur l'entrée 1 du dispositif, d'échantillons ayant des amplitudes supérieures au seuil de niveau et d'autre part, en provenance du comparateur à seuils 11 un signal binaire à l'état logique correspondant à des écarts entre valeurs maximales reconnus faibles. Son temps d'activité préalable peut prendre deux valeurs (à une quantification près) selon l'état logique du signal S disponible à la sortie 3 du dispositif général, la plus petite valeur étant choisie lorsque l'état logique du signal S correspond à une détection de signaux de données. Cela permet d'augmenter la sensibilité du détecteur au cours d'une transmission de données. Le détecteur 50 reçoit, outre les signaux de sortie des comparateurs à seuils 10 et 11, le signal d'horloge H et le signal de cadencement C1, un autre signal de cadencement C2 issu du circuit de cadencement 70, de même forme que le signal C1 mais retardé par rapport à ce dernier pour tenir compte des temps de traitement des signaux et le signal de sortie S du dispositif général dont dépend le choix du temps d'activité préalable.

Le circuit de temps de maintien 60 est un temporisateur qui prolonge systématiquement l'état logique du signal de sortie U du détecteur 50 correspondant au déclenchement de ce dernier, c'est-à-dire à la détection de signaux de données, par un temps de maintien formé d'un certain nombre de fenêtres temporelles successives. Il reçoit le signal de sortie U du détecteur 50, le signal d'horloge H et un signal de cadencement C3 de même forme que le signal C2 mais retardé par rapport à ce dernier pour tenir compte des temps de traitement des signaux.

Les différents éléments du dispositif décrit relativement à la figure 1 vont être détaillés ci-après dans le cadre d'une application à la détection de signalisation sur une voie téléphonique codée en MIC. Cette signalisation peut être une signalisation de ligne ou entre enregistreurs selon les systèmes de signalisation téléphonique n° 4 et 5 du CCITT ou encore une signalisation de test de continuité, selon les systèmes de signalisation téléphonique n° 6 et 7 du CCITT dont les fréquences sont situées dans la partie haute de la bande vocale, là ou les signaux de parole ne présentent que très peu d'énergie.

Dans ce cadre particulier, on limite la sensibilité du comparateur à seuils de niveau et de fréquence à la demi-bande supérieure des fréquences d'une voie téléphonique c'est-à-dire aux fréquences supérieures à 1 500 ou 1 800 Hz grâce, comme on le verra par la suite, à une prise en compte du signe des échantillons dans leur comptabilisation. On fixe le seuil de niveau à − 23 dBmo valeur qui est inférieure au niveau minimal de la signalisation ; le choix d'une telle valeur qui est assez nettement supérieure au niveau du bruit de fond moyen sur une voie téléphonique permet non seulement de vérifier si le signal présent sur la voie téléphonique surveillée n'est pas qu'un bruit mais permet en outre d'obtenir une protection accrue contre des déclenchements intempestifs du dispositif sur les sons sifflants de la parole, dont les fréquences se situent vers le haut de la bande vocale mais qui sont à faible niveau. La durée d'une fenêtre temporelle est de 6 ms ce qui permet de couvrir la période de la composante de plus basse fréquence de la signalisation ainsi que la plus grande période de battement entre deux fréquences de la signalisation (battement entre les fré-quences de 2 400 Hz et 2 600 Hz). Le temps d'activité préalable est choisi égal, à un échelon de quantification près, à 120 ms (20 fenêtres temporelles) ou 24 ms (4 fenêtres temporelles) et le temps de maintien à 360 ms (60 fenêtres temporelles).

Dans la suite de la description, on supposera que les mémoires, bascules, compteurs et décompteurs sont sensibles aux fronts montants des signaux appliqués à leurs entrées d'horloge et que les informations prises alors en compte par ces circuits sont celles qui étaient présentes sur leurs autres entrées juste avant l'apparition de ces fronts. On supposera de plus que le changement d'échantillons du signal de la voie téléphonique suit immédiatement le front montant du signal d'horloge H.

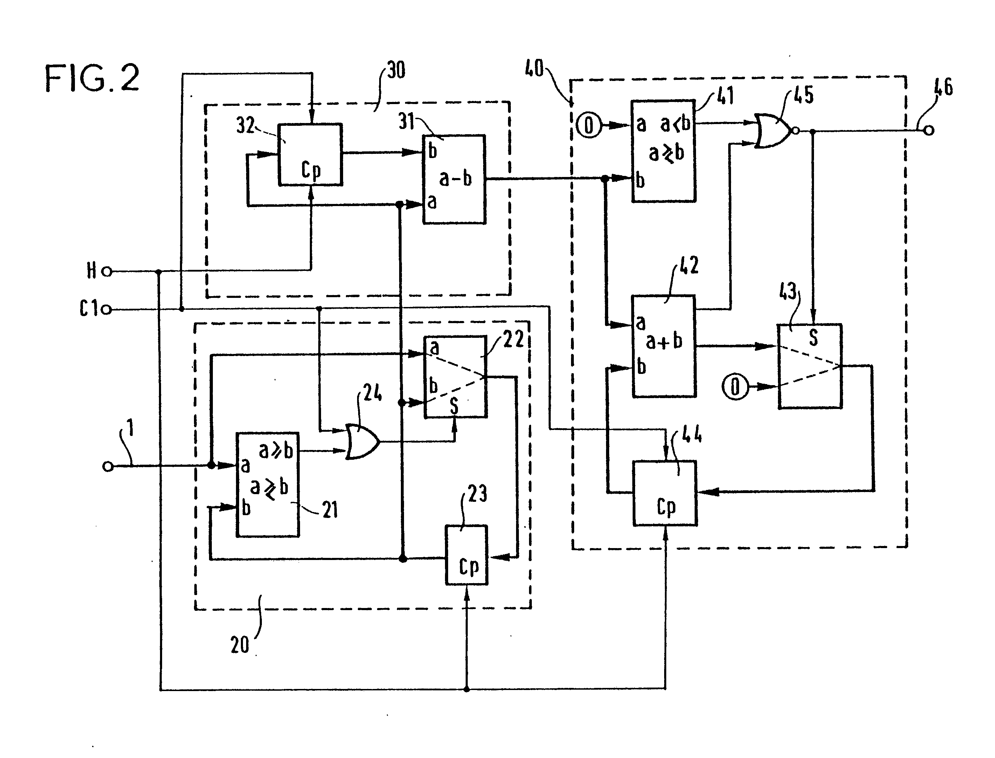

La figure 2 détaille la constitution du comparateur à seuils d'écart.

En tête de ce comparateur se trouve l'indicateur de valeur maximale 20 qui est formé d'un comparateur numérique 21 à deux entrées parallèles de sept bits reliées à l'entrée 1 du dispositif général, l'une directement et l'autre par l'intermédiaire d'un multiplexeur 22 à deux entrées parallèles de sept bits et d'un registre à décalage 23 à un étage et sept bits parallèles qui est cadencé par le signal d'horloge H et qui est bouclé sur lui-même par l'intermédiaire du multiplexeur 22. Le comparateur 21 commande l'adressage du multiplexeur 22 de manière à diriger vers le registre à décalage 23 le plus grand des deux nombres appliqués à ses entrées. Une porte logique de type « ou » 24 intercalée dans la commande d'adressage du multiplexeur 22 permet de faire intervenir le signal de cadencement C1 pour faire inscrire dans le registre à décalage 23 l'échantillon reçu au début de chaque fenêtre temporelle.

Les huits bits codant en MIC l'échantillon reçu sur l'entrée 1 du dispositif général sont appliqués, à l'exclusion du bit de polarité, sur l'une des entrées du comparateur 21 qui compare l'amplitude X qu'ils représentent avec l'amplitude Y codée sur les sept bits mémorisés dans le registre à décalage 23.

Chaque fenêtre temporelle de 6 ms s'étend sur 48 périodes du signal d'horloge H qui est à la fréquence d'échantillonnage de 8 kHz du codage MIC. Elle débute sur un front montant du signal H qui précède immédiatement un front montant du signal de cadencement C1.

Lors de la première période du signal d'horloge H au cours de la $n^{ième}$ fenêtre temporelle le signal de cadencement C1 passe au niveau logique 1 juste après le signal d'horloge H et force le multiplexeur 22 à appliquer l'amplitude X de l'échantillon présent sur l'entrée 1 du dispositif général au registre à décalage 23 dans laquelle elle sera inscrite à la fin de cette première période. Lors de la période suivante du signal d'horloge H, le signal de cadencement C1 repasse au niveau logique 0 juste après la transition montante du signal d'horloge H et y reste jusqu'à la fin de la $n^{ième}$ fenêtre temporelle laissant l'adressage du multiplexeur 22 sous la commande du comparateur 21 qui fait inscrire dans le registre à décalage 23 la plus grande des deux valeurs X et Y. A la fin de la dernière période du signal d'horloge H occupant la $n^{ième}$ fenêtre temporelle la valeur maximale MAXn se retrouve inscrite dans le registre à décalage 23 pour la durée de la première période du signal d'horloge H de la n + unième fenêtre temporelle.

A la suite de l'indicateur de valeur maximale 20 se trouve le circuit indicateur d'écarts 30 formé d'un soustracteur numérique 31 à une sortie à neuf bits parallèles, huit d'amplitude un de polarité et deux entrée parallèles de sept bits reliées à la sortie du registre à décalage 23, l'une directement, l'autre par l'intermédiaire d'un registre à décalage 32 à un étage et sept bits parallèles, cadencé par le signal d'horloge H validé par le signal de cadencement C1 appliqué sur une entrée de validation d'horloge de ce registre 32.

L'inscription dans le registre à décalage 32 est provoquée par les fronts montants du signal d'horloge H qui se produisent alors que le signal C1 est au niveau logique 1. Ce registre 32 s'inscrit ainsi à la fin de la première période de chaque fenêtre temporelle, et retient de la sorte la valeur maximale inscrite dans le registre 23 juste avant qu'elle ne soit effacée pour la recherche d'une nouvelle valeur maximale.

On a donc pendant la plus grande partie de la première période du signal d'horloge H au cours de la n + unième fenêtre temporelle d'une part la valeur maximale MAXn correspondant à la $n^{ième}$ fenêtre temporelle inscrite dans le premier registre 23 et non encore inscrite dans le deuxième registre 32 et d'autre part la valeur maximale MAXn-1 correspondant à la n-unième fenêtre temporelle et encore inscrite dans le deuxième registre 32 ainsi que d'ailleurs leur écart Δn en sortie du soustracteur 31.

En dehors de la première période du signal d'horloge le soustracteur délivre les écarts entre la valeur maximale inscrite dans le deuxième registre 32 et les amplitudes inscrites dans le premier registre 23. Ces écarts ne sont pas pris en considération dans la suite grâce à des validations par le signal de cadencement C1.

En sortie se trouve le circuit estimateur d'écarts 40 qui est formé essentiellement d'un comparateur numérique 41 et d'un accumulateur.

Le comparateur numérique 41 permet de vérifier si les écarts Δn entre valeurs maximales successives MAXn, MAXn-1 ne dépassent pas en valeur absolue, un seuil d'écart fixé ici à trois unités de codage MIC. Il a deux entrées à six bits parallèles l'une recevant les six bits de plus forts poids en provenance de la sortie du soustracteur numérique 31 et l'autre la valeur numérique 0 codée sur six bits, et une sortie à un bit qui passe à l'état logique 1 dès que les six bits de plus forts poids du signal provenant du soustracteur numérique 31 correspondent à une valeur numérique non nulle. Sa sortie est connectée par l'intermédiaire d'une porte logique de type « non ou » 45 à la sortie 46 du circuit estimateur d'écarts 40.

L'accumulateur permet de vérifier si la somme algébrique des écarts entre valeurs maximales successives n'excède pas, en valeur absolue, trois unités de codage MIC ; il permet ainsi de vérifier si les écarts entre valeurs maximales non successives restent eux aussi faibles n'excédant de toutes façons pas en valeur absolue, six unités de codage MIC. Il est formé d'un additionneur-soustracteur 42 à deux entrées bouclé sur lui-même par l'intermédiaire d'un multiplexeur 43 à deux entrées et d'un registre à décalage 44 à un étage. L'additionneur-soustracteur 42 reçoit d'une part, sur une entrée le bit de polarité et les deux bits de plus faible poids du signal provenant du soustracteur numérique 31 et sur son autre entrée la valeur numérique mémorisée dans le registre à décalage 44 à un étage et trois bits parallèles, un de signe et deux d'amplitude. Il en fait la somme algébrique qu'il délivre sur une sortie à quatre bits parallèles dont le bit de signe et les deux bits de plus faibles poids sont appliqués à une première entrée du multiplexeur 43 et dont le bit de plus fort poids sert de signalisation de débordement et est appliqué par l'intermédiaire de la porte logique de type « non ou » 45 à la sortie 46 du circuit estimateur d'écarts 40. Le multiplexeur 43 permet de remettre à zéro l'accumulateur. Il reçoit sur sa deuxième entrée la valeur numérique 0 codée sur un bit de signe et deux d'amplitude. Il a sa commande d'adresse connectée à la sortie 46 du comparateur à seuils d'écart de manière à appliquer au registre à décalage 44 le signal à valeur numérique nulle lorsque la sortie du circuit estimateur d'écart 40 est au niveau logique 0. Le registre à décalage 44 à un étage et trois bits parallèles est cadencé par le signal d'horloge H validé par le signal de cadencement C1 que ce registre 44 reçoit sur une entrée de validation d'horloge. Il inscrit la valeur délivrée par le multiplexeur 43 à la fin de la première période du signal H occupant chaque fenêtre temporelle c'est-à-dire à un instant où le circuit soustracteur 31 délivre effectivement une valeur d'écart entre valeurs maximales. De la sorte, l'accumulateur fonctionne uniquement sur lesdits écarts.

L'accumulateur travaille ici entre − 3 et + 3. Dès qu'il déborde par valeur inférieure ou supérieure ou dès qu'un écart entre valeurs maximales successives franchit le seuil d'écart, il est remis à sa valeur médiane qui est zéro.

Le signal I obtenue en sortie 46 de l'ensemble du comparateur à seuils d'écarts est pendant la première période du signal d'horloge H occupant chaque fenêtre temporelle, au niveau logique 0 si l'écart entre les deux dernières valeurs maximales trouvées dépasse trois unités de codage MIC ou si la somme algébrique des écarts entre valeurs maximales successives trouvées depuis la dernière remise à zéro de l'accumulateur excède en valeur absolue trois unités de codage MIC, et au niveau logique 1 autrement.

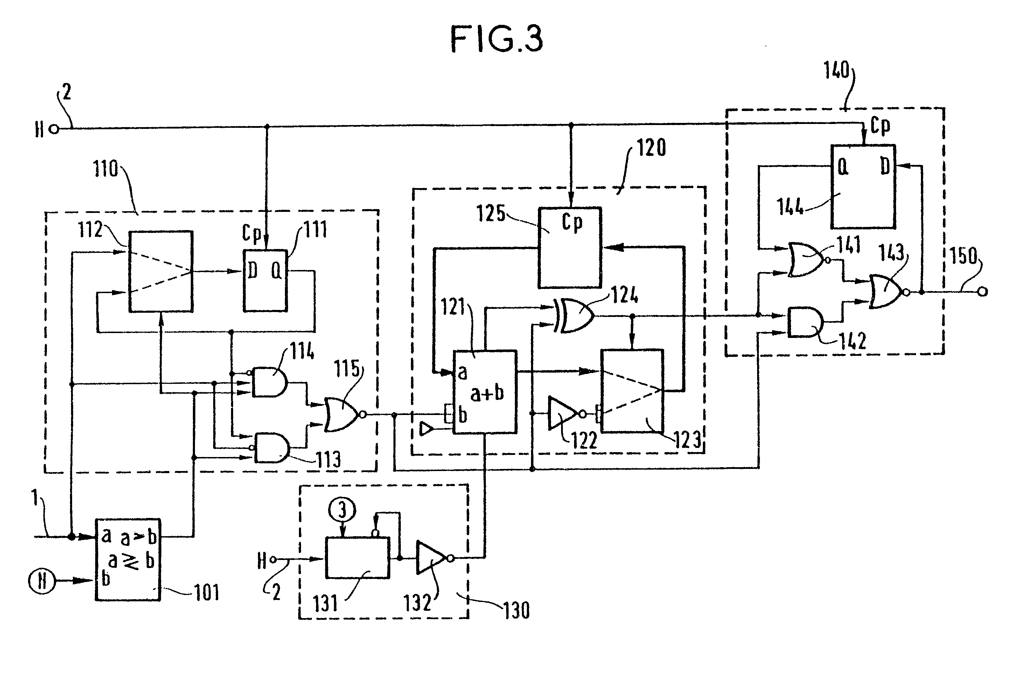

La figure 3 détaille la constitution du comparateur à seuils de niveau et de fréquence.

En tête de ce circuit se trouve un comparateur numérique 101 à deux entrées qui reçoit sur une entrée les quatre bits de plus forts poids de l'échantillon codé en MIC présent sur l'entrée générale du dispositif et sur une deuxième entrée une valeur numérique de seuil de niveau N et délivre en sortie un signal logique à l'état 1 dès que l'amplitude de l'échantillon reçu dépasse le seuil de niveau N. Ce comparateur numérique 101 permet d'éliminer au départ les échantillons de trop faible niveau. La valeur du seuil N est choisie un peu inférieure à la plus petite valeur de niveau que peuvent avoir les signaux de signalisation que l'on veut détecter. Ici elle est prise égale à − 23 dBmo, le niveau pour la signalisation étant de 0 à −18 dBmo pour le système de signalisation n° 4 du CCITT, de − 2 à −16 dBmo pour le système de signalisation n° 5 du CCITT, de − 6 à −18 dBmo pour les systèmes de signalisation n° 6 et 7 du CCITT.

A la suite du comparateur numérique 101 se trouve un détecteur de changement de signe 110 entre échantillons successifs de niveau supérieur au seuil N. Ce détecteur 110 comporte un circuit de mémorisation du signe de l'avant-dernier échantillon de niveau supérieur au seuil N et un circuit de comparaison des signes de l'avant-dernier et du dernier échantillon de niveau supérieur au seuil N. Le circuit de mémorisation de signe est formé d'une bascule de type D 111, qui est cadencée par le signal d'horloge H et dont l'entrée D est soit bouclée à sa sortie Q soit reliée à la borne affectée au bit de polarité de l'entrée 1 du dispositif général au moyen d'un multiplexeur 112 à deux entrées. Le comparateur numérique 101 commande l'adressage du multiplexeur 112 de manière à boucler sur elle-même la bascule de type D 111 tant que les échantillons présents à l'entrée 1 du dispositif général ont un niveau inférieur au seuil N. Le circuit de comparaison de signe est formé d'un ensemble de trois portes logiques 113, 114, 115 qui délivre en sortie un signal binaire à l'état logique 0 lorsque le dernier échantillon disponible sur l'entrée 1 du dispositif général a un niveau supérieur au seuil N et un signe différent de celui mémorisé dans la bascule de type D 111, et à l'état logique 1 autrement. Pour ce faire, la porte 113, de type « et », a une entrée inverseuse reliée à la borne affectée au bit de polarité de l'entrée 1 et deux entrées non inverseuses reliées l'une à la sortie Q de la bascule de type D 111 et l'autre à la sortie du comparateur numérique 101, la porte 114, également de type « et », a une entrée inverseuse reliée à la sortie Q de la bascule de type D 111 et deux entrées non inverseuses reliées l'une à la sortie du comparateur numérique 101 et l'autre à la borne affectée au bit de polarité de l'entrée 1 ; la porte 115, de type « non ou », à deux entrées reliées aux sorties des portes 113 et 114 respectivement et sa sortie constitue celle du circuit de comparaison de signe.

Le détecteur de changement de signe 110 alimente un compteur-décompteur 120 qui, grâce à une comptabilisation des changements de signe et des absences de changement de signe pondérée par une correction périodique, permet de reconnaître la présence dans le signal échantillonné de composantes ayant des fréquences supérieures à 1 500 Hz.

Si l'on fait abstraction de la sélection de niveau opérée en amont, une composante fondamentale de 1 500 Hz se traduit par trois changements de signe tous les huits échantillons à 8 kHz. Pour que le compteur-décompteur atteigne une position d'équilibre il faut qu'il compte autant qu'il décompte c'est-à-dire que l'on ajoute deux unités au nombre de changements de signe repérés sur huit échantillons ce qui peut se faire en ajoutant périodiquement à la fréquence de 2 kHz une unité au nombre des changements de signe. Pour une composante fondamentale inférieure à 1 500 Hz le compte va déborder en faveur des non changements de signe alors que pour une composante fondamentale supérieure à 1 500 Hz le compte débordera dans l'autre sens en faveur des changements de signe. Comme l'on recherche à détecter la présence dans le signal échantillonné des composantes de fréquence supérieure à 1 500 Hz on s'intéresse essentiellement aux débordements du compte en faveur des changements de signe et l'on fait intervenir la sélection de niveau à l'encontre de ces débordements, en assimilant tout échantillon de niveau insuffisant à un non changement de signe comme cela ressort de la forme du signal binaire délivré par le détecteur de changement de signe 110.

Le compteur décompteur 120 est réalisé à l'aide d'un additionneur numérique 121 de deux nombres à quatre bits, d'un inverseur 122, d'un multiplexeur 123 à deux entrées de quatre bits, d'une porte logique de type « ou exclusif » 124 à deux entrées et d'un registre à décalage 125 à un étage et quatre bits parallèles.

L'additionneur numérique 121 reçoit sur une première entrée le nombre inscrit dans le registre à décalage 125 constituant le contenu du compteur décompteur et sur une deuxième entrée, dont les trois bornes affectés aux trois bits de plus forts poids reçoivent en parallèle le signal de sortie du détecteur de signe 110 et celle affectée au bit de plus faible poids un niveau logique « 1 » permanent, un nombre égal à 15 ou 1 selon que le signal de sortie du détecteur de changement de signe 110 est au niveau logique « 1 ou 0 ». L'additionneur numérique 121 reçoit en outre, sur une entrée « propagation de retenue » le signal de sortie d'un circuit de commande de correction 130.

La somme à quatre bits délivrée par l'additionneur numérique 121 est appliquée sur une première entrée du multiplexeur 123. Ce dernier reçoit sur sa seconde entrée dont les quatre bornes sont connectées en parallèle par l'intermédiaire de l'inverseur 122 à la sortie du détecteur de changement de signe 110, un nombre égal à 0 ou 15 selon que le signal de sortie du détecteur de changement de signe 110 est au niveau logique « 1 » ou « 0 ». La commande d'adressage du multiplexeur 123 est faite, par l'intermédiaire de la porte logique de type « ou exclusif » 124, à la fois par le signal d'une sortie de propagation de retenue de l'additionneur numérique 121 et par le signal de sortie du détecteur de changement de signe 110. Elle correspond pour un niveau logique « 0 » à une sélection de la première entrée et pour un niveau logique 1 à une sélection de la deuxième entrée.

La sortie du multiplexeur 123 est connectée à l'entrée du registre à décalage 125 qui est cadencé par le signal d'horloge H.

Le circuit de commande de correction 130 est constitué d'un décompteur 131 recevant sur une entrée d'horloge le signal d'horloge H, sur une entrée d'initialisation le nombre 3 et sur une entrée inverseuse de commande d'initialisation son propre signal de sortie traduisant par un niveau logique 0 ou 1 que son contenu est égal à zéro ou non. Ce signal de sortie constitue, après passage dans un inverseur 132, le signal de correction appliqué au compteur décompteur 120.

Le décompteur 131 est initialisé à trois et décompte au rythme du signal d'horloge H. Lorsque, au début d'une période du signal d'horloge H, il arrive à zéro, son signal de sortie initialement au niveau logique 1 passe au niveau logique 0 provoquant sa remise à trois au début de la période suivante du signal d'horloge H. Il en résulte en sortie du circuit de commande de correction un signal binaire passant au niveau logique 1 pendant une période sur quatre du signal d'horloge H.

Le compteur-décompteur 120 compte ou décompte les périodes du signal d'horloge H. Il les compte en présence d'une détection de changement de signe traduite par un niveau logique 0 en sortie du détecteur de changement de signe 110 et les décompte en l'absence d'une détection de changement de signe ou d'échantillon de niveau suffisant traduite par un niveau logique 1 en sortie du détecteur de changement de signe 110, une période supplémentaire étant en outre comptée toutes les quatre périodes du signal d'horloge H sous la commande du circuit de commande de correction 130. Lorsque le compteur-décompteur 120 arrive aux butées inférieure 0 ou supérieure 15 il y reste sans les franchir tant qu'il n'en n'est pas éloigné par un compte ou un décompte.

En présence d'un niveau logique 0 en sortie du détecteur de changement de signe 110 l'additionneur numérique 121 ajoute 1 au contenu du registre à décalage 125 ou éventuellement le nombre 2 si son entrée de propagation de retenue est portée au niveau logique 1 par le circuit de commande de correction 130. La somme obtenue est inscrite dans le registre à décalage 125 sauf si elle dépasse 15 auquel cas un niveau logique 1 apparaît sur la sortie de retenue de l'additionneur numérique 121 et provoque la sélection de la deuxième entrée du multiplexeur 123 sur laquelle est appliqué le nombre 15 qui se trouve inscrit dans le registre 125 en lieu et place de la somme.

En présence d'un niveau logique 1 en sortie du détecteur de changement de signe 110 l'additionneur numérique 121 ajoute le nombre 15 au contenu du registre à décalage 125 ou éventuellement le nombre 16 si son entrée de propagation de retenue est portée au niveau logique 1 par le circuit de commande de correction 130. Si le contenu du registre à décalage 125 est différent de 0, la capacité de l'additionneur numérique 121 qui est de quatre bits est dépassée de sorte qu'il apparaît en sortie soit le contenu du registre à décalage diminué d'une unité soit ce contenu intact. Le niveau logique 1 apparaissant sur la sortie de retenue de l'additionneur numérique 121 est bloqué par la porte logique « ou exclusif » 124 de sorte que le contenu du registre à décalage 125 est soit décrémenté d'une unité soit conservé ce qui correspond à un décomptage d'un non changement de signe éventuellement annihilé par une correction. Si le contenu du registre à décalage 125 est 0 et si l'entrée de propagation de retenue est portée au niveau logique 1 par le circuit de commande de correction 130 le fonctionnement reste le même, l'additionneur numérique 121 ajoute le nombre 16 à 0, voit sa capacité dépassée et délivre une somme nulle avec un niveau logique 1 sur sa sortie de retenue qui est bloquée par la porte logique « ou exclusif » 124 de sorte qu'un 0 est réinscrit dans le registre à décalage 125 traduisant un décomptage de non changement de signe annihilé par une correction. Si, enfin, le contenu du registre à décalage 125 est 0 alors que l'entrée de propagation de retenue est au niveau logique 0, l'additionneur numérique 121 ajoute le nombre 15 à 0, sa capacité n'étant pas dépassée il délivre le nombre 15 en sortie avec un niveau logique 0 sur sa sortie de retenue. Ce dernier niveau logique 0 appliqué sur la porte logique « ou exclusif » 124 provoque, en combinaison avec le niveau logique 1 de la sortie du détecteur de changement de signe 110 la sélection de la deuxième entrée du multiplexeur 123 sur laquelle est appliqué le nombre 0 qui se trouve inscrit dans le registre à décalage en lieu et place de la somme.

Le compteur décompteur 120 est suivi d'un circuit de détection 140 de débordement qui se déclenche c'est-à-dire engendre un niveau logique 1 à sa sortie 150 en cas de débordement par valeur supérieure c'est-à-dire de débordement du compte en faveur des changements de signe et qui revient en position non déclenchée en cas de débordement par valeur inférieure c'est-à-dire de débordement du compte en faveur des non changements de signe ce qui lui procure un hystérésis évitant les battements. Ce circuit de détection 140 est formé d'un ensemble de trois portes logiques 141, 142, 143 et d'une bascule de type D 144.

La bascule de type D 144 a son entrée connectée en sortie 150 du circuit de détection de débordement 140. Elle est cadencée par le signal d'horloge H et mémorise pendant chaque période du signal d'horloge H l'état antérieur du circuit de détection de débordement 140. La porte logique 141 de type « non ou » à deux entrées a l'une de ses entrées connectée à la sortie Q de la bascule de type D 144 et l'autre à la sortie de la porte logique « ou exclusif » 124 délivrant le signal de débordement du compteur-décompteur 120. La porte logique 142 de type « et » à deux entrées a l'une de ses entrées connectée à la sortie de la porte logique 124 et l'autre à la sortie du détecteur de changement de signe 110. La porte logique 143 de type « non ou » à deux entrées est connectée par ses entrées aux sorties des portes logiques 141, 142 et délivre le signal de sortie du circuit de détection de débordement 140.

Lorsque, pendant une période considérée du signal d'horloge H, le compteur-décompteur 120 n'est pas en butée contre l'une ou l'autre de ses deux limites 0 ou 15 la sortie de la porte logique « ou exclusif » 124 est au niveau logique 0 et rend l'ensemble des trois portes logiques 141, 142, 143 transparent à l'état de sortie de la bascule de type D 144. Le circuit détecteur de débordement 140 conserve donc en sortie 150 le niveau qu'il avait pendant la période précédente du signal d'horloge H. Il est dans son intervalle d'hystérésis.

Lorsque, pendant une période considérée du signal d'horloge H, le compteur-décompteur 120 est en butée, la porte logique « ou exclusif » 124 est au niveau logique 1 et donne à l'ensemble des trois portes logiques 141, 142, 143 le comportement d'un inverseur vis-à-vis de l'état de sortie du détecteur de changement de signe 110 c'est-à-dire qu'il passe au niveau logique 1 en cas de détection de changement de signe caractérisant un débordement du compte en faveur des changements de signe ou au niveau logique 0 en cas de détection d'un non changement de signe caractérisant un débordement du compte en faveur des non changements de signe.

On notera que les basculements du circuit de détection de débordement 140 pourrait être provoqués non pas lorsque le compteur-décompteur 120 vient en butée contre ses limites mais lorsque son contenu arrive à ces limites. Cela augmenterait un peu le nombre de circuits entrant dans la réalisation de ce compteur-décompteur en raison de la nécessité de décodage du contenu du compteur-décompteur. On obtiendrait, en contrepartie, une légère diminution du temps de réaction du comparateur à seuils de niveau et de fréquence.

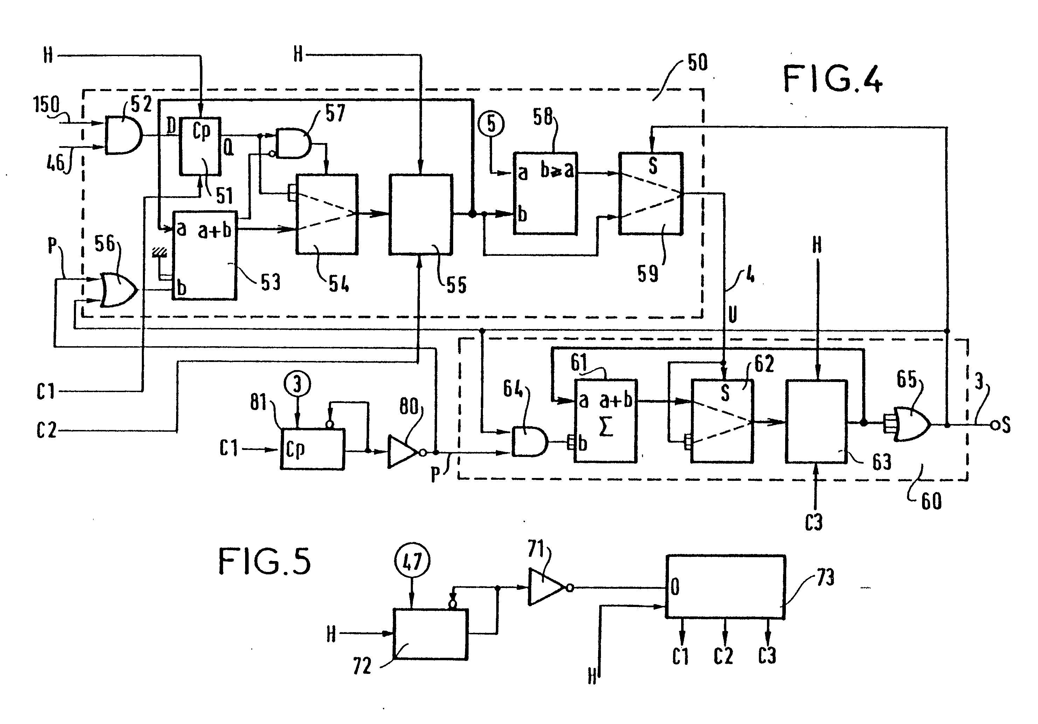

La figure 4 détaille la constitution du détecteur 50 et du circuit à temps de maintien 60 repérés à la figure 1.

Le détecteur 50 comporte en entrée une bascule de type D 51 précédée d'une porte logique de type « et » 52 à deux entrées connectées aux sorties 46 et 150 du circuit estimateur d'écarts 40 et du circuit de détection de débordement 140. Cette bascule de type D 51 valide le signal de sortie du comparateur à seuils d'écart (11 figure 1) et resynchronise ce signal ainsi que celui de la sortie du comparateur à seuils de niveau et de fréquence (10 figure 1).

Elle est cadencée par le signal d'horloge H validé par le signal de cadencement C1 appliqué sur une entrée de validation d'horloge et est ainsi activée en fin de la première période du signal d'horloge H au sein de chaque fenêtre temporelle. Sa sortie est au niveau logique 1 lorsque le critère de régularité d'amplitude et les critères de niveau et de fréquence ont été satisfaits pendant la fenêtre temporelle précédente, et au niveau logique 0 autrement.

Le circuit 50 comporte encore un compteur de temps à deux vitesses qui reste en butée contre sa limite supérieure et qui est remis à zéro par un niveau logique 0 en sortie Q de la bascule de type D 51 traduisant le fait que l'un des critères n'est pas satisfait. Les deux vitesses de comptage sont une cadence rapide égale à celle du signal de cadencement C1 lorsque le dispositif général est déclenché c'est-à-dire que la sortie 3 du dispositif général est au niveau logique 1 indiquant la présence d'un signal de signalisation et une cadence lente égale au quart de la précédente lorsque le dispositif général n'est pas déclenché c'est-à-dire lorsque la sortie 3 du dispositif général est au niveau logique 0 indiquant l'absence de signal de signalisation. Le compteur de temps est essentiellement constitué par un additionneur numérique 53 de deux nombres de trois bits, d'un multiplexeur 54 et d'un registre à décalage 55 à un étage et trois bits parallèles.

L'additionneur numérique 53 a une entrée connectée à la sortie du registre à décalage 55 et l'autre connectée par ses deux bornes affectées aux deux bits de plus fort poids à la masse (niveau logique 0) et par sa borne affectée au bit de plus faible poids à la sortie d'une porte logique de type « ou » 56 à deux entrées. Cette dernière reçoit sur l'une de ses entrées le signal de sortie 3 du dispositif général et sur l'autre un signal de cadencement P dont la période s'étend sur quatre fenêtres temporelles avec un niveau logique 1 maintenu pendant la durée d'une fenêtre temporelle et qui est synchronisé sur le signal de cadencement C1. La porte logique de type « ou » 56 permet d'appliquer le nombre 1 à l'une des entrées de l'additionneur numérique 53, soit constamment lorsque le dispositif général est déclenché soit une fenêtre temporelle sur quatre lorsque le dispositif général n'est pas déclenché. L'additionneur numérique 53 délivre en sortie la somme du nombre qui est inscrit dans le registre à décalage 55 et du nombre 0 ou 1.

Le multiplexeur 54 a l'une de ses entrées à trois bits connectée à la sortie à trois bits de l'additionneur numérique 53 et les trois bornes parallèles de son autre entrée également à trois bits connectées à la sortie Q de la bascule de type D 51. Sa commande d'adressage sélectionne la sortie de l'additionneur numérique 53 lorsqu'elle est au niveau logique 1. Elle est contrôlée par une porte logique de type « et » 57 à deux entrées qui reçoit le signal de sortie de la bascule de type D 51 et le signal complémenté d'une sortie de propagation de retenue de l'additionneur numérique 53.

Le registre à décalage 55 à un étage et trois bits parallèles a son entrée connectée à la sortie du multiplexeur 54 et est cadencé par le signal d'horloge H validé par le signal de cadencement C2 de même forme que le signal de cadencement C1 mais en retard sur ce dernier d'une période de signal d'horloge H. La validation par le signal de cadencement C2 qui est appliqué sur une entrée de validation de ce registre 55 permet de tenir compte du fait que la bascule de type D 51 de resynchronisation des signaux de sortie des comparateurs à seuils d'écart, et de niveau et de fréquence n'est activée qu'en fin de la première période du signal d'horloge H occupant chaque fenêtre temporelle.

En présence d'un niveau logique 0 à la sortie de la bascule de type D 51 de resynchronisation pendant la deuxième période du signal d'horloge H d'une fenêtre temporelle considérée, traduisant le fait que l'un des critères n'a pas été satisfait sur la fenêtre temporelle précédente le multiplexeur 54 sélectionne son entrée non reliée à l'additionneur numérique 53 dont les trois bits parallèles sont portés au niveau logique 0 par la sortie de la bascule de type D 51. Il en résulte un nombre 0 à la sortie du multiplexeur 54, qui est inscrit dans le registre à décalage 55 à la fin de la deuxième période du signal d'horloge H de la fenêtre temporelle considérée. Le contenu du compteur-décompteur est ainsi soit remis à zéro, soit maintenu à zéro.

En présence d'un niveau logique 1 à la sortie de la bascule de type D 51 de resynchronisation pendant la deuxième période du signal d'horloge H d'une fenêtre temporelle considérée traduisant le fait que les critères ont été satisfaits pendant la fenêtre temporelle précédente et d'un niveau logique 0 sur la sortie de propagation de retenue de l'additionneur numérique 53 traduisant le fait que la somme obtenue ne dépasse pas le nombre 7 limite supérieure de la capacité du compteur de temps, le multiplexeur 54 sélectionne son entrée reliée à la sortie de l'additionneur numérique 53 provoquant l'inscription de ladite somme dans le registre à décalage 55 et par conséquent l'incrémentation d'une unité du compteur de temps à la fin de la deuxième période du signal d'horloge H occupant la fenêtre temporelle considérée si la sortie 3 du dispositif général est au niveau logique 1 indiquant la présence d'un signal de signalisation ou si le signal de cadencement P est au niveau logique 1. Dans un cas le comptage s'effectue à la cadence d'une unité par 6ms période du signal de cadencement C1 c'est-à-dire d'une unité par fenêtre temporelle. Dans l'autre cas, le comptage s'effectue à la cadence d'une unité par 24ms (période du signal de cadencement P) c'est-à-dire d'une unité toutes les quatre fenêtres temporelles. Ces deux vitesses de comptage ont pour but l'obtention des deux temps d'activité préalable mentionnés précédemment.

En présence d'un niveau logique 1 à la sortie de la bascule de type D 51 de resynchronisation pendant la deuxième période du signal d'horloge H d'une fenêtre temporelle considérée traduisant le fait que les critères ont été satisfaits pendant la fenêtre temporelle précédente et d'un niveau logique 1 sur la sortie de propagation de retenue de l'additionneur numérique 53 traduisant le fait que la somme obtenue dépasse le nombre 7 (111 en binaire) limite supérieure de la capacité du compteur de temps, le multiplexeur 54 sélectionne son entrée non reliée à la sortie de l'additionneur numérique 53. Cette dernière entrée reçoit en parallèle sur ses trois bornes le niveau logique 1 de la sortie de la bascule de type D 51 de resynchronisation de sorte que le multiplexeur 54 délivre en sortie le nombre 7 qui est à nouveau inscrit dans le registre à décalage 55 à la fin de la deuxième période du signal d'horloge H de la fenêtre temporelle considérée si bien que le compteur de temps reste en butée contre sa limite supérieure.

Le signal de cadencement P utilisé pour définir la plus petite vitesse du compteur de temps est engendré à partir du signal de cadencement C1 au moyen d'un inverseur 80 piloté par un décompteur 81 recevant sur une entrée d'horloge le signal de cadencement C1, sur une entrée d'initialisation le nombre 3 et sur une entrée inverseuse de commande d'initialisation son propre signal de sortie traduisant par un niveau logique 0 ou 1 que son contenu est égal à zéro ou non. Le décompteur 81 est initialisé à trois et décompte au rythme des fenêtres temporelles. Lorsqu'il arrive à zéro son signal de sortie initialement au niveau logique 1 passe au niveau logique 0 provoquant sa remise à trois au début de la fenêtre temporelle suivante. Il en résulte en sortie de l'inverseur 80 un signal de cadencement P passant au niveau logique 1 pendant une fenêtre temporelle sur quatre.

Le compteur de temps est suivi d'un circuit de décodage permettant de repérer les instants où son contenu passe par la valeur 4 si le dispositif général est déclenché ou par la valeur 5 si le dispositif général n'est pas déclenché. Ce circuit de décodage est formé d'un comparateur numérique 58 à deux entrées de trois bits l'une connectée à la sortie du registre à décalage 55 et l'autre recevant le nombre 5 codé sur trois bits, et d'un multiplexeur 59 à deux entrées d'un bit connectées l'une à une sortie du comparateur numérique 58 passant au niveau logique 1 lorsque le contenu du compteur de temps est supérieur ou égal au nombre 5, et l'autre à la borne affectée au bit de plus fort poids de la sortie du registre à décalage 55. Le multiplexeur 59 est adressé par le signal présent sur la sortie 3 du dispositif général de manière à sélectionner son entrée connectée à la sortie du comparateur numérique 58 en cas d'un niveau logique 0 à la sortie 3 du dispositif général et son autre entrée en cas contraire.

En présence d'un niveau logique 0 en sortie 3 du dispositif général indiquant l'absence de signal de signalisation, le compteur de temps s'il compte, le fait avec sa plus faible vitesse tandis que le multiplexeur 59 sélectionne la sortie du comparateur numérique 58 et émet un signal de sortie au niveau logique 0 tant que le contenu du compteur reste inférieur à cinq ce qui correspond au temps d'activité préalable de 120 ms.

En présence d'un niveau logique 1 en sortie 3 du dispositif général indiquant la présence d'un signal de signalisation, le compteur de temps s'il compte, le fait avec sa plus grande vitesse tandis que le multiplexeur 59 sélectionne le bit de plus fort poids de la sortie du registre à décalage 55 et émet un signal de sortie au niveau logique 0 tant que le contenu du compteur reste inférieur à quatre ce qui correspond à un temps d'activité préalable de 24 ms.

La porte logique de type « ou » 56 et le multiplexeur 59 constituent, comme on vient de le voir, des moyens de réglage de la durée du temps d'activité préalable et permettent d'obtenir une durée plus courte pendant les temps de maintien.

Le signal U disponible en sortie du multiplexeur 59 qui indique par son niveau logique 1 ou 0 que le dispositif reconnaît ou non la présence d'un signal de signalisation sur la voie surveillée est appliqué au circuit de temps de maintien 60. Ce dernier est essentiellement formé d'un décompteur de temps qui fonctionne au rythme du signal de cadencement P et qui est remis à sa valeur maximale par un niveau logique 1 en sortie 4 du multiplexeur 59.

Le décompteur de temps est formé d'un additionneur numérique 61 à deux entrées de quatre bits parallèles, d'un multiplexeur 62 à deux entrées parallèles de quatre bits et d'un registre à décalage 63 à un étage et quatre bits parallèles.

L'additionneur numérique 61 reçoit d'une part, sur une première entrée connectée à la sortie du registre à décalage 63, le nombre à quatre bits qui est inscrit dans ce registre et qui constitue le contenu du décompteur de temps et d'autre part, sur une deuxième entrée dont les quatre bornes sont connectées en parallèle à la sortie d'une porte logique de type « et » 64, un nombre égal à 0 ou à 15 (1111 en binaire). La partie logique « et » 64 a deux entrées sur lesquelles sont appliqués le signal de sortie du dispositif général et le signal de cadencement P, respectivement.

Le multiplexeur 62 reçoit d'une part, sur une première entrée, le signal de sortie de l'additionneur numérique 61 et d'autre part, sur une deuxième entrée dont les quatres bornes sont connectées en parallèle à la sortie 4 du multiplexeur 59, un nombre égal à 0 ou 15. Il est adressé par le multiplexeur 59 de manière à sélectionner son entrée connectée à la sortie de l'additionneur numérique 61 lorsque la sortie du multiplexeur 59 est au niveau logique 0 traduisant la non détection d'un signal de signalisation, et son autre entrée dans le cas contraire.

Le registre à décalage 63 à un étage et quatre bits parallèles a son entrée connectée à la sortie du multiplexeur 62 et est cadencé par le signal d'horloge H validé par un signal de cadencement C3 de même forme que le signal de cadencement C1 mais en retard sur ce dernier de deux périodes du signal d'horloge H. La validation par le signal de cadencement C3 qui est appliqué sur une entrée de validation d'horloge du registre 63 premet de tenir compte du fait que le registre à décalage 55 n'est inscrit qu'à la fin de la deuxième période du signal d'orloge H occupant chaque fenêtre temporelle.

Une porte logique de type « ou » 65 à quatre entrées est connectée en sortie du registre à décalage 63 et délivre le signal de sortie S du dispositif général. Ce signal S est au niveau logique 1 tant que le contenu du décompteur de temps est différent de zéro.

En présence d'un niveau logique 1 en sortie 4 du multiplexeur 59 traduisant la détection de signaux de signalisation, le multiplexeur 62 sélectionne son entrée qui n'est pas reliée à l'additionneur numérique 61 et dont les quatre bits parallèles sont portées au niveau logique 1. Il en résulte l'apparition du nombre 15 qui est la valeur maximale du contenu du décompteur de temps, qui s'inscrit dans le registre à décalage 63 et qui provoque un niveau logique 1 en sortie 3 du dispositif général. Un niveau logique 1 en sortie 4 du multiplexeur 59 traduisant la détection de signaux de signalisation est ainsi transmis à la sortie 3 du dispositif général tout en remettant le décompteur de temps à sa valeur maximale.

En présence d'un niveau logique 0 en sortie 4 du multiplexeur 59 traduisant une absence de détection de signaux de signalisation, le décompteur de temps retourne à la valeur zéro s'il n'y était pas déjà ou reste à zéro s'il y était déjà. S'il n'est pas à zéro, la sortie 3 du dispositif général est au niveau logique 1, le dispositif général continuant donc d'indiquer la présence d'un signal de signalisation, et débloque la porte logique de type « et » 64 qui laisse passer les signaux de cadencement P. Ces derniers, au niveau logique 1 pendant une fenêtre temporelle sur quatre, appliquent à l'entrée de l'additionneur numérique 61 la valeur 15 toutes les 24 ms. Cette valeur 15 est sommée avec le contenu du décompteur de temps par l'additionneur numérique 61 qui déborde et délivre en sortie le contenu du décompteur de temps décrémenté d'une unité. Si le niveau logique 0 se maintient en sortie du multiplexeur 59, le signal de sortie de l'additionneur numérique 61 est inscrit dans le registre à décalage 63 et sert de nouveau contenu au décompteur le temps. A l'arrivée à zéro du décompteur de temps, la sortie 3 du dispositif général passe à l'état logique 0, le dispositif général cessant donc d'indiquer la présence d'un signal de signalisation, et bloque la porte logique de type « et » 64 arrêtant par la même le décomptage.

Le temps de maintien obtenu est de 360 ms (à un échelon de quantification près).

La fig. 5 détaille la constitution du circuit générateur des signaux de cadencement 70. Celui-ci comporte un circuit de mise en forme, formé d'un inverseur 71 piloté par un décompteur 72 recevant sur une entrée d'horloge le signal d'horloge H, sur une entrée d'initialisation le nombre 47 et sur une entrée inverseuse de commande d'initialisation son propre signal de sortie et un circuit de déphasage formé d'un registre à décalage 73 à trois étages connecté en sortie de l'inverseur 71 et cadencé par le signal d'horloge H.

Le décompteur 72 est initialisé à 47 et décompte au rythme du signal d'horloge H. Lorsqu'il arrive à zéro, son signal de sortie initialement au niveau logique 1 passe au niveau logique 0 provoquant sa remise à quarante sept au début de la période suivante du signal d'horloge H. Il en résulte en sortie de l'inverseur 71 un signal binaire passant au niveau logique 1 pendant une période sur quarante huit du signal d'horloge H.

Le registre à décalage permet d'obtenir les trois signaux de cadencement C1, C2, C3 décalés les uns des autres d'une période du signal d'horloge H.

On peut, sans sortir du cadre de l'invention modifier certaines dispositions ou remplacer certains moyens par des moyens équivalents.

## Revendications

1. Procédé de détection dans une voie téléphonique de signaux de données ou de signalisation indépendamment les uns des autres dans lequel on compare l'amplitude du signal présent sur la voie téléphonique à un seuil de niveau caractérisé en ce qu'il consiste en outre à :

mesurer les valeurs maximales atteintes par l'amplitude du signal présent sur la voie téléphonique au cours de fenêtres temporelles successives de même durée, ladite durée étant au moins égale à la période de la composante de plus basse fréquence des signaux de données et de signalisation ainsi qu'à la plus grande période de battement entre fréquences susceptible d'être présentée par ces signaux,

calculer des écarts entre les valeurs maximales d'amplitudes mesurées,

comparer par rapport à au moins un seuil d'écart, les valeurs absolues des écarts calculés

et détecter des signaux de données et de signalisation chaque fois que, au cours d'une durée dite, temps d'activité préalable, formée d'un certain nombre de fenêtres temporelles consécutives, le seuil de niveau a été dépassé sans que le seuil d'écart le soit.

2. Procédé selon la revendication 1, caractérisé en ce que le calcul des écarts se fait entre valeurs maximales d'amplitude atteintes au cours de fenêtres consécutives.

3. Procédé selon la revendication 2, caractérisé en ce que le calcul des écarts se fait également entre valeurs maximales d'amplitude atteintes au cours de fenêtres non consécutives, grâce à un cumul algébrique des écarts entre les valeurs maximales d'amplitude consécutives.

4. Procédé selon la revendication 3, dans lequel on prolonge d'une certaine durée dite temps de maintien toute détection de signaux de données et de signalisation, caractérisé en ce que l'on raccourcit pendant les temps de maintien, le temps d'activité préalable en diminuant le nombre de fenêtres temporelles successives qui le constitue.

5. Procédé selon la revendication 1, appliqué à la détection de signalisations téléphoniques situées dans le haut de la bande vocale, caractérisé en ce qu'il consiste en outre à rechercher par une analyse fréquentielle du signal présent sur la voie téléphonique, l'existence de composantes fondamentales dans le haut de la bande vocale et à inhiber toute détection de données et de signalisation en cas de recherche infructueuse.

6. Dispositif assurant la mise en œuvre du procédé selon la revendication 1, comportant des moyens comparateurs d'amplitude (10) comparant l'amplitude du signal présent sur la voie téléphonique (1) avec un seuil de niveau, caractérisé en ce qu'il comporte en outre :

des moyens de cadencement (70) fournissant des signaux de cadencement déterminant des fenêtres temporelles successives de même durée, ladite durée étant au moins égale à la période de la composante de plus basse fréquence des signaux de données et de signalisation ainsi qu'à la plus grande période de battement entre fréquences susceptible d'être présentée par ces signaux,

des moyens indicateurs de valeurs maximales (20) cadencés par les moyens de cadencement (70) délivrant la valeur maximale atteinte, au cours de chaque fenêtre temporelle, par l'amplitude du signal présent sur la voie téléphonique (1),

des moyens indicateurs d'écarts (30) calculant des écarts entre les valeurs maximales délivrées par les moyens indicateurs de valeurs maximales (20),

des moyens estimateurs d'écarts (40) comparant, par rapport à au moins un seuil d'écart, les valeurs absolues des écarts fournis par les moyens indicateurs d'écarts (30)

et des moyens détecteurs (50) pilotés par les moyens comparateurs (10), estimateurs (40) et de cadencement (70), délivrant un signal de détection de données et de signalisation chaque fois que, au cours d'une durée dite temps d'activité préalable et formée d'un certain nombre de fenêtres temporelles consécutives, les moyens comparateurs d'amplitude (10) ont donné une indication de dépassement du seuil de niveau et les moyens estimateurs d'écarts (40) une indication de non dépassement du seuil d'écart.

7. Dispositif selon la revendication 6, caractérisé en ce que les moyens indicateurs d'écarts (30) comportent :

une mémoire (32) mémorisant l'avant-dernière valeur maximale délivrée par les moyens indicateurs de valeurs maximales (20)

et un circuit soustracteur (31) calculant l'écart entre la dernière valeur maximale délivrée par les moyens indicateurs de valeurs maximales (20) et l'avant-dernière valeur maximale stockée dans ladite mémoire (32).

8. Dispositif selon la revendication 7, caractérisé en ce que les moyens estimateurs d'écarts (40) comportent :

un premier comparateur à seuil (41) recevant les écarts délivrés par le circuit soustracteur (31) et indiquant s'ils sont ou non inférieurs en valeur absolue au seuil d'écart

et un accumulateur de capacité limitée qui effectue la somme algébrique des écarts délivrés par le soustracteur, qui déborde dès que cette somme dépasse en valeur absolue le seuil d'écart et qui est remis à sa valeur moyenne après chaque débordement.

9. Dispositif selon la revendication 6, comportant des moyens de temporisation de maintien (60) disposés à la suite des moyens de détection (50) et prolongeant d'une durée de maintien toute détection de signaux de données et de signalisation, caractérisé en ce qu'il comporte en outre des moyens de réglage (56, 59) du temps d'activité préalable diminuant, pendant les temps de maintien, le nombre de fenêtres temporelles successives du temps d'activité préalable.

10. Dispositif selon la revendication 6 destiné à la détection de signalisations téléphoniques situées dans le haut de la bande vocale dans un signal présent sur la voie téléphonique disponible sous forme d'échantillons successifs délivrés à cadence régulière, caractérisé en ce que les moyens comparateurs d'amplitude comportent un sélecteur d'échantillons (101) ignorant tous ceux dont l'amplitude est inférieure au seuil de niveau et sont combinés à des moyens de détection de fréquences hautes (110, 120, 130 et 140) à compteur-décompteur, dont la fréquence de déclenchement est au milieu de la bande vocale et qui fonctionnent à partir des échantillons délivrés par le sélecteur pour donner une indication simultanée de dépassement de seuil de niveau et de présence de composantes fondamentales dans le haut de la bande vocale.

**Claims**

1. A method for detecting data or signalisation signals on a telephone channel independently from one another, the method including the comparison of the amplitude of the signal present on the telephone channel with a threshold level, characterized in that it further comprises the steps of

measuring the maximum values reached by the amplitude of the signal present on the telephone channel during successive time windows of equal duration, said duration being at least equal to the period of the lowest frequency component in the data and signalisation signals and to the highest beat period between frequencies which might be presented by these signals,

calculating the differences between the maximum measured amplitude values,

comparing the absolute values of the calculated differences with a least one difference threshold,

and detecting data and signalisation signals each time the level threshold has been exceeded without the difference threshold being exceeded during a duration called prior activity time constituted by a certain number of consecutive time windows.

2. A method according to claim 1, characterized in that the differences are calculated between maximum amplitude values obtained during consecutive windows.

3. A method according to claim 2, characterized in that the differences are also calculated between maximum amplitude values obtained during non-consecutive windows by algebraically cumulating the differences between the consecutive maximum amplitude values.

4. A method according to claim 3, in which any detection of data and signalisation signals is extended by a certain duration called hold time, characterized in that during the hold time, the prior activity time is shortened by reducing the number of successive time windows of which it consists.

5. A method according to claim 1, applied to the detection of telephone signalisations situated in the upper part of the vocal band, characterized in that it further consists in the step of looking for the existence of fundamental components in the upper part of the vocal band by a frequency analysis of the signal present on the telephone channel, and inhibiting any such detection of data and signalisation, if no such components are found.

6. A device for performing the method according to claim 1, comprising amplitude comparator means (10) for comparing the amplitude of the signal present on the telephone channel (1) to a level threshold, characterized in that it further comprises :

sequencer means (70) furnishing sequence signals which determine successive time windows of equal duration, said duration being at least equal to the period of the lowest frequency component in the data and signalisation signals, as well as to the largest beat period between frequencies which can be presented by these signals,

maximum value indicator means (20) controlled by the sequencer means (70) and delivering the maximum value achieved during each time window by the amplitude of the signal present on the telephone channel (1),

difference indicator means (30) which calculate the differences between the maximum values delivered by the maximum value indicator means (20),

difference estimation means (40) comparing the absolute difference values furnished by the difference indicator means (30) to at least one difference threshold,

and detector means (50) controlled by the comparator means (10), estimation means (40) and sequencer means (70) and delivering a data and signalisation detection signal any time that during a duration called prior activity time and constituted by a certain number of consecutive time windows, the amplitude comparator means (10) have indicated that the level threshold has been exceeded whereas the difference estimation means (40) give an indication that the difference threshold has not been exceeded.

7. A device according to claim 6, characterized in that the difference indicator means (30) comprise :

a memory (32) for storing the last-but-one maximum value delivered by the maximum value indicator means (20),

and a subtractor circuit (31) calculating the difference between the last maximum value delivered by the maximum value indicator (20) and the last-but-one maximum value stored in that memory (32).

8. A device according to claim 7, characterized in that the difference estimation means (40) comprise :

a first threshold comparator (41) receiving the differences delivered by the subtractor circuit (31) and indicating if they exceed or do not exceed in absolute values the difference threshold,

and an accumulator of limited capacity realizing the algebraic sum of the differences delivered by the subtractor, this accumulator overflowing when said sum exceeds in absolute value the difference threshold, and being reset to its mean value after each overflow.

9. A device according to claim 6, comprising hold timing means (60) disposed behind the detection means (50) and extending any detection of data and signalisation signals by a hold duration, characterized in that it further comprises means (56, 59) for adjusting the prior activity time, these means reducing the number of successive time windows of the prior activity time during the hold times.

10. A device according to claim 6 for use in the detection of telephone signalisations situated in the upper part of the vocal band in a signal present on the telephone channel this signal being available in the form of successive samples delivered at a regular rate, characterized in that the amplitude comparator means include a sample selector (101) conceived to ignore all samples of an amplitude below a level threshold, and that the amplitude comparator means are combined to means for detecting the higher frequencies (110, 120, 130 and 140) of the up-down counter type, the start frequency of which is situated in the middle of the vocal band and which operates on the basis of the samples delivered by the selector in order to give a simultaneous indication that the level threshold has been exceeded and that the fundamental components in the upper part of the vocal band are present.

**Patentansprüche**

1. Verfahren zum Erkennen von Daten- oder Signalisationssignalen unabhängig voneinander in einem Telefonkanal, wobei die Amplitude des auf dem Telefonkanal vorhandenen Signals mit einer Pegelschwelle verglichen wird, dadurch gekennzeichnet, daß außerdem

die Maximalwerte der Amplitude des auf dem Telefonkanal im Verlauf aufeinanderfolgender Zeitfenster gleicher Dauer vorhandenen Signals gemessen werden, wobei diese Dauer mindestens der Periode der Komponente geringster Frequenz der Daten- und Signalisationssignale sowie der größten Auslenkungsperiode zwischen Frequenzen gleich ist, die in diesen Signalen auftreten kann,

die Abstände zwischen den gemessenen maximalen Amplitudenwerten gemessen werden,

die Absolutwerte der berechneten Abweichungen mit mindestens einer Abweichungsschwelle verglichen werden,

und Signale als Daten- und Signalisationssignale jeweils erkannt werden, wenn während einer solchen Dauer, genannt vorhergehende Aktivitätszeit, die von einer gewissen Anzahl aufeinanderfolgender Zeitfenster gebildet wird, die Pegelschwelle überschritten worden ist, ohne daß die Abweichungsschwelle überschritten würde.

2. Verfahren nach Anspruch 1, dadurch gekennzeichnet, daß die Berechnung der Abweichungen zwischen den maximalen erreichten Amplitudenwerten während aufeinanderfolgender Fenster erfolgt.

3. Verfahren nach Anspruch 2, dadurch gekennzeichnet, daß die Abweichungen auch zwischen maximalen erreichten Amplitudenwerten während nicht aufeinanderfolgender Fenster berechnet werden, und zwar aufgrund einer algebraischen Anhäufung der Abweichungen zwischen den aufeinanderfolgenden maximalen Amplitudenwerten.

4. Verfahren nach Anspruch 3, in dem jede Erkennung von Daten und Signalisationssignalen um eine gewisse Dauer, Haltezeit genannt, verlängert wird, dadurch gekennzeichnet, daß während der Haltezeit die vorhergehende Aktivitätszeit verkürzt wird, indem die Anzahl der aufeinanderfolgenden Zeitfenster verringert wird, von denen sie gebildet wird.

5. Verfahren nach Anspruch 1 in Anwendung auf die Erkennung von Telefonsignalisationen, die sich am oberen Rand des Sprachfrequenzbands befinden, dadurch gekennzeichnet, daß es außerdem darin besteht, durch eine Frequenzanalyse des auf dem Telefonkanal vorliegenden Signals die Existenz von Fundamentalkomponenten im oberen Bereich des Sprachfrequenzbands zu suchen und im Fall einer fruchtlosen Suche jede Erkennung von Daten und Signalisationen zu blockieren.

6. Vorrichtung zur Durchführung des Verfahrens nach Anspruch 1, mit Amplitudenvergleichsmitteln (10), die die Amplitude des auf dem Telefonkanal (1) vorhandenen Signals mit einer Pegelschwelle vergleichen, dadurch gekennzeichnet, daß sie außerdem aufweist:

Taktmittel (70) zur Lieferung von Taktsignalen, die aufeinanderfolgende Zeitfenster gleicher Dauer bestimmen, wobei diese Dauer mindestens der Periode der Komponente mit der niedrigsten Frequenz der Daten- und Signalisationssignale sowie der größten Abweichungsperiode zwischen Frequenzen gleich ist, die in diesen Signalen vorkommen kann,

Mittel zur Angabe maximaler Werte (20), die von den Taktmitteln (70) getaktet werden und den Maximalwert liefern, den während jedes Zeitfensters die Amplitude des auf dem Telefonkanal (1) vorhandenen Signale erreicht,

Mittel zur Angabe von Abweichungen (30), die Abweichungen zwischen den von den Mitteln zur Angabe der maximalen Werte (20) gelieferten Maximalwerten berechnen,

Mittel zum Abschätzen der Abweichungen (40), die die von den Mitteln zur Angabe der Abweichungen (30) gelieferten Absolutwerte mit mindestens einem Abweichungsschwellwert vergleichen,

und Erkennungsmittel (50), die von den Mitteln zum Vergleich (10), zum Abschätzen (40) und zum Takten (70) gesteuert werden und ein Erkennungssignal für Daten und Signalisation jeweils dann liefern, wenn während einer vorhergehende Aktivitätszeit genannten Dauer, die von einer gewissen Anzahl aufeinanderfolgender Zeitfenster gebildet wird, die Amplitudenvergleichsmittel (10) eine Angabe bezüglich des Überschreitens der Pegelschwelle geliefert haben und die Mittel zum Abschätzen von Abweichungen (40) eine Angabe betreffend das Nichtüberschreiten der Abweichungsschwelle geliefert haben.

7. Vorrichtung nach Anspruch 6, dadurch gekennzeichnet, daß die Mittel zur Angabe der Abweichungen (30)

einen Speicher (32), in dem der vorletzte von den Mitteln zur Angabe maximaler Werte (20) gelieferte Maximalwert gespeichert wird, und

einen Subtraktionskreis (31) aufweisen, der die Abweichung zwischen dem letzten von den Mitteln zur Angabe maximaler Werte (20) gelieferten Maximalwert und dem vorletzten Maximalwert berechnen, der in diesem Speicher (32) gespeichert ist.

8. Vorrichtung nach Anspruch 7, dadurch gekennzeichnet, daß die Mittel zur Schätzung der Abweichungen (40)

einen ersten Schwellwertkomparator (41), dem die vom Subtraktionskreis (31) gelieferten Abweichungen zugeführt werden und der angibt, ob diese Abweichungen unterhalb eines Abweichungsschwellwerts absolut gesehen liegen oder nicht,

und einen Akkumulator beschränkter Kapazität aufweisen, der die algebraische Summe der vom Subtraktionskreis gelieferten Abweichungen bildet, der überläuft sobald diese Summe absolut gesehen die Abweichungsschwelle überschreitet und der nach jedem Überlauf auf seinen Mittelwert zurückgestellt wird.

9. Vorrichtung nach Anspruch 6 mit Mitteln zur Halteverzögerung (60), die hinter den Erkennungsmitteln (50) angeordnet sind und um eine Haltedauer jede Erkennung von Daten- und Signalisationssignalen verlängern, dadurch gekennzeichnet, daß außerdem Mittel (56, 59) zur Regelung der vorhergehenden Aktivitätszeit vorgesehen sind, die während der Haltezeit die Anzahl der aufeinanderfolgenden Zeitfenster der vorhergehenden Aktivitätszeit verringern.

10. Vorrichtung nach Anspruch 6 zum Erkennen von Telefonsignalisationen, die sich im oberen Bereich des Vokalbandes in einem auf dem Telefonkanal vorhandenen Signal befinden, das in Form von aufeinanderfolgenden und mit einer regelmäßigen Frequenz gelieferten Tastproben verfügbar ist, dadurch gekennzeichnet, daß die Amplitudenvergleichsmittel einen Tastprobenselektor (101) enthalten, der alle Tastproben mit einer Amplitude unterhalb der Pegelschwelle übersieht, und daß diese Amplitudenvergleichsmittel mit Mitteln zur Erkennung der hohen Frequenzen (110, 120, 130 und 140) vom Typ Vorwärts-Rückwärtszähler kombiniert sind, deren Auslösefrequenz mitten im Sprachfrequenzband liegt und die Tastproben verarbeiten, die vom Selektor geliefert werden, um eine gleichzeitige Angabe betreffend die Überschreitung der Pegelschwelle und betreffend die Anwesenheit fundamentaler Komponenten im oberen Bereich des Sprachfrequenzbands zu liefern.

# FIG.1

FIG.2

# FIG.3

0 080 688

FIG.4

FIG.5

0 080 688